# EUROPEAN PATENT SPECIFICATION

(11) **EP 3 258 203 B1**
(45) Date of publication and mention of the grant of the patent: **31.07.2019**
(21) Application number: 17175828.7
(22) Date of filing: 13.06.2017
(51) Int. Cl.: F28F 3/02, F28F 7/02

(54) **COMPLEX PIN FIN HEAT EXCHANGER**
KOMPLEXER FLACHROHRWÄRMETAUSCHER
ÉCHANGEUR DE CHALEUR À AILETTES FINES COMPLEXES

(30) Priority: 13.06.2016 US 201615180576
(43) Date of publication of application: 20.12.2017
(73) Proprietor: Hamilton Sundstrand Corporation, Charlotte, NC 28217 (US)
(72) Inventor: ZAFFETTI, Mark A., Suffield, CT Connecticut 06078 (US); STRANGE, Jeremy M., Windsor, CT Connecticut 06095 (US)
(74) Representative: Dehns

(56) References cited:
- EP-A2- 1 348 924
- WO-A1-2005/033607
- WO-A1-2006/102736
- US-A1- 2015 027 669
- US-A1- 2016 114 439

## Description

### BACKGROUND OF THE INVENTION

This application relates to a heat exchanger having complex shaped pins.

Heat exchangers are known and utilized in any number of applications. One type of heat exchanger is a pin fin heat exchanger. In such a heat exchanger, a first fluid flows through a first chamber and a second fluid flows through a second chamber. A plate separates the two chambers and the fluids exchange heat through the plate.

To increase the heat transfer efficiency, it is known to have pins extending between adjacent plates. Historically, the plates and fins have had a constant cross-sectional thickness.

Additive manufacturing techniques have been developed. In an additive manufacturing system, a tool lays down material in layers and forms components. While it has been proposed to form heat exchangers from additive manufacturing techniques, a pin fin heat exchanger has not been formed by additive manufacturing techniques.

WO 2006/102736 A1 discloses a heat exchanger in accordance with the preamble of claim 1, and a method in accordance with the preamble of claim 9.

WO 2005/033607 A1 discloses a heat exchanger, EP 1 348 924 A2 discloses an exhaust gas heat exchanger for motor vehicles, and US 2016/114439 A1 discloses a method of making a heat exchanger using additive manufacturing and a heat exchanger.

### SUMMARY OF THE INVENTION

According to a first aspect of the present invention, there is provided a heat exchanger as set forth in claim 1.

According to a further aspect of the present invention, there is provided a method as set forth in claim 9.

These and other features may be best understood from the following drawings and specification.

### BRIEF DESCRIPTION OF THE DRAWINGS

Figure 1 schematically shows a heat exchanger.
Figure 2 is a cross-sectional view through the Figure 1 heat exchanger.
Figure 3A shows a first pin example.
Figure 3B shows an alternative example.
Figure 3C shows an alternative example.
Figure 3D shows an alternative example.
Figure 3E shows an embodiment according to the invention.
Figure 3F shows an alternative embodiment according to the invention.
Figure 4 shows a manufacturing technique.

### DETAILED DESCRIPTION

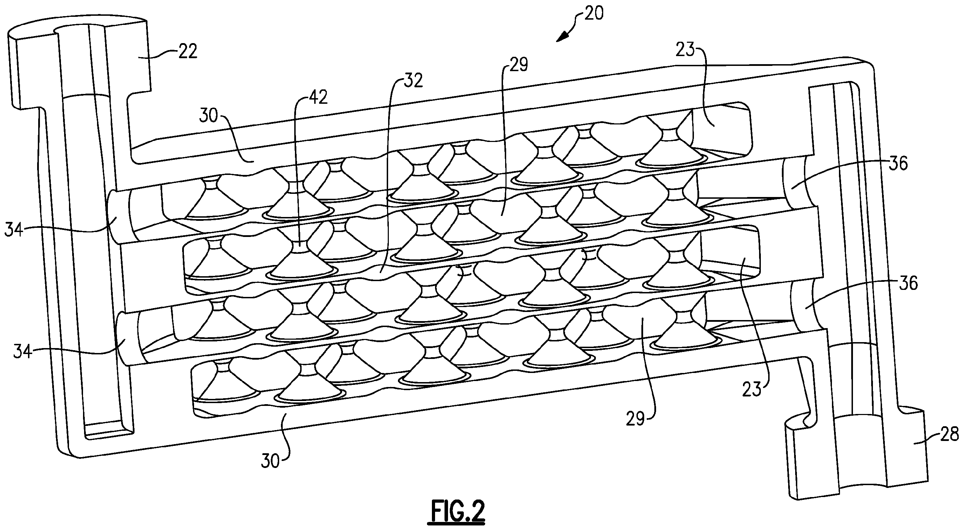

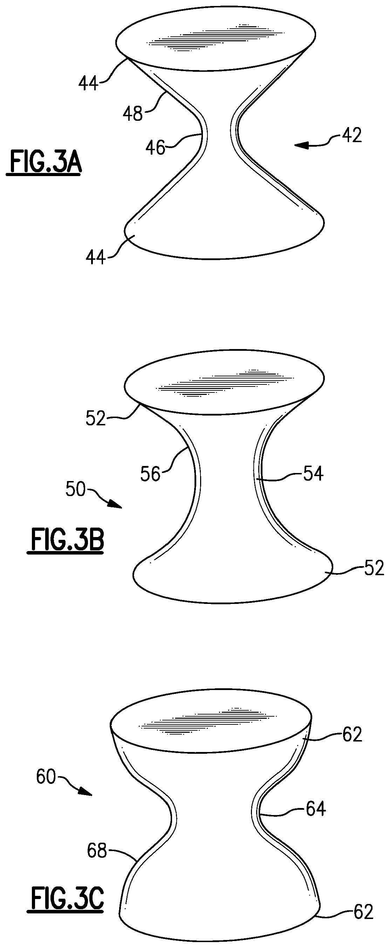

Figures 2 and 3A to 3D disclose embodiments which are not part of the invention, but are merely examples which are useful for understanding the invention.

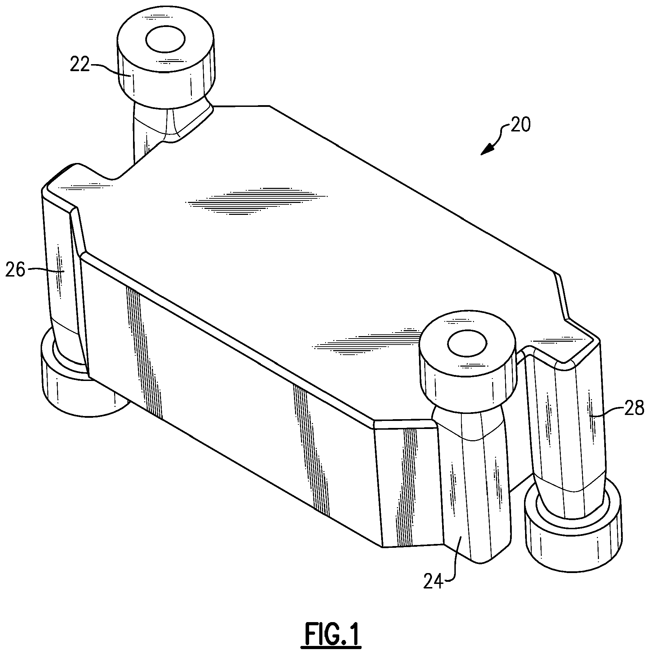

Figure 1 shows a heat exchanger 20 having a first port 22, which may be an inlet port, and communicating fluid to an outlet port 24. A second fluid enters through an inlet port 26 and exits through an outlet port 28.

While a particular arrangement is disclosed, the parallel flow of the two fluids as illustrated can be replaced with a cross-flow application. In such an application, the port 28 could be an inlet and port 26 an outlet. For that matter, a number of other inlet/outlet port arrangements and configurations could be utilized.

Figure 2 is a cross-sectional view through the heat exchanger 20. As can be seen, the port 22 provides fluid to chambers 23 and the second port 28 provides fluid to chambers 29. Outer walls 30 are formed along with intermediate or inner walls 32. As can be appreciated, the inner walls 32 separate chambers 23 and 29. As known, heat is exchanged between the fluids in the chambers through the walls 32.

As shown in this figure, ports 34 communicate from the port 22 into the chambers 23. Similarly, ports 36 communicate with chambers 29 to the ports 28.

Pins 42 extend between the walls 30 and 32. Pins also extend between walls 32.

As can be appreciated in this figure, the pins 42 have enlarged surfaces adjacent the walls 30 and 32 and a thinner portion in the center.

Figure 3A shows the pin embodiment 42. The outer portions 44, which are actually in contact with the walls 30 and 32, are larger and extend in a frusto-conical direction to a smaller central portion 46. The outer surfaces 48 in this embodiment are straight, or along a constant angle. Thus, the shape is actually frusto-conical.

Figure 3B shows a generally frusto-conical pin embodiment 50. Here again, the outer portions 52 are larger than the central portion 54. However, the term "generally frusto-conical" can be seen to be a concave curving surface 56.

Figure 3C shows another pin embodiment 60 having outer portions 62 and a thinner central portion 64. The generally frusto-conical section 68 is a convex curve.

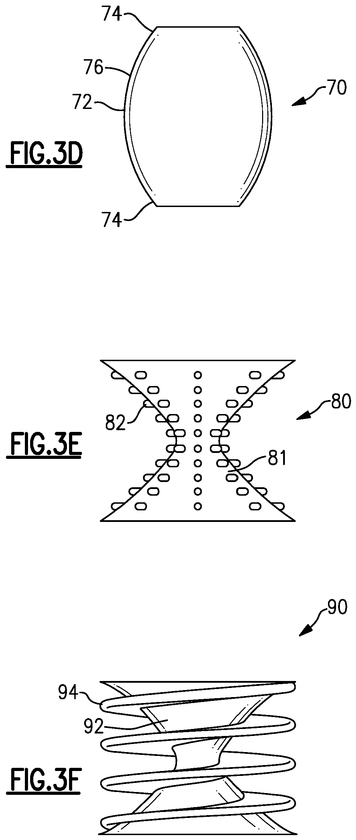

Figure 3D shows an embodiment 70 wherein the outer portions 74 are smaller than the central portion 72. Here again, the outer surface 76 is generally frusto-conical on both sides of the portion 72.

For purposes of this application, the term "generally frusto-conical" means that the size either increases or decreases from one end toward the center and then moves back to either a larger or smaller size as shown across these embodiments.

Figure 3E shows yet another embodiment 80 wherein the frusto-conical surface 81 is provided with a plurality of spikes 82.

Figure 3F shows an embodiment 90 where the generally frusto-conical surface 92 is formed with a spiral rib 94. The discrete surfaces are spikes.

It should be appreciated that any number of other shapes may be provided on the outer surface of the pins. Stated generally, there are discrete surfaces extending outwardly of the generally frusto-conical shapes to increase the heat transfer effect.

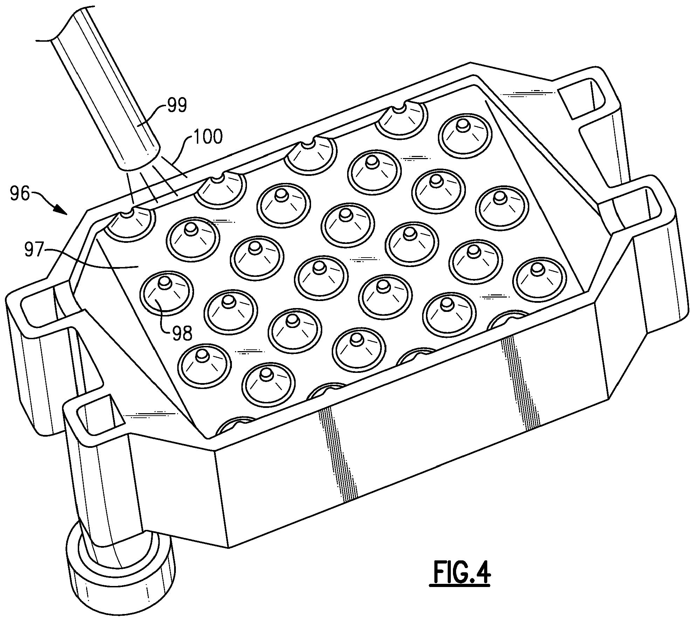

The pin embodiments, as disclosed above, would be difficult to manufacture using standard manufacturing techniques. Figure 4 shows a manufacturing technique for forming the heat exchanger, as disclosed. Here, an intermediate heat exchanger 96 is being formed. There are plates 97 and pins 98. An additive manufacturing tool 99 is shown laying down material 100. As known, material is deposited in layers and very complex shapes can be achieved.

Any number of additive manufacturing techniques can be utilized to form a heat exchanger as disclosed. In one embodiment, direct metal selective laser melting may be used.

This disclosure could be summarized as a heat exchanger 20 has a plurality of outer walls and at least one inner wall (walls 30 and 32), a first fluid port communicating a first fluid into a chamber 23 on one side of at least one inner wall and a second port communicating a second fluid into a second chamber 29 on an opposed side of the at least one inner wall. A plurality of pins extend from the at least one inner wall in at least one of chambers 23/29, the plurality of pins have a generally frusto-conical shape.

A method of forming a heat exchanger 20 includes laying down layers of material 100 with an additive manufacturing process and forming a plurality of outer walls and at least one inner wall. The method also includes forming a first fluid port for communicating a first fluid into a chamber formed on one side of at least one inner wall and forming a second port communicating a second fluid into a second chamber formed on an opposed side of the at least one inner wall. The method further includes the step of forming a plurality of pins extending from at least one inner wall in at least one of the chambers, the plurality of pins are formed to have a generally frusto-conical shape.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A heat exchanger (20) comprising:
a plurality of outer walls (30) and a plurality of inner walls (32), a first fluid port (22) communicating a first fluid into a chamber (23) on one side of said plurality of inner walls (32) and a second port (28) communicating a second fluid into a second chamber (29) on an opposed side of said plurality of inner walls (32), and a plurality of pins (42) extending from said plurality of inner walls (32) in at least one of said chambers (23,29), said plurality of pins (42) having a generally frusto-conical surface (81;91),
and extend between two of said plurality of inner walls (32) such that there is an outer pin portion (44;52;62;74) in contact with two of said inner walls (32) and a central pin portion (46;54;64;72); **characterised in that**
surfaces (82;94) are formed extending outwardly of said generally frusto-conical surface (81;92); and
said surfaces (82;94) are spikes (82) or a spiral rib (94) extending outwardly and continuing around said generally frusto-conical surface (92).

2. The heat exchanger (20) as set forth in claim 1, wherein said generally frusto-conical surface (81;91) extends from an enlarged surface (44;52;62) in contact with one of said outer walls (30) and said inner wall (32), and extending to a smaller central portion (46;54;64) such that there are generally frusto-conical surfaces on each side of said central portion (46;54;64).

3. The heat exchanger (20) as set forth in claim 2, wherein said generally frusto-conical surfaces are true frusto-conical surfaces extending along a constant angle (48).

4. The heat exchanger (20) as set forth in claim 2, wherein said generally frusto-conical surfaces are curved (56;68).

5. The heat exchanger (20) as set forth in claim 4, wherein said curves are convex (56).

6. The heat exchanger (20) as set forth in claim 4, wherein said curves are concave (68).

7. The heat exchanger (20) as set form in claim 1, wherein said generally frusto-conical surface (81;91) results in there being a greater cross-sectional area at a central portion (72) of said plurality of pins (42), and extending to smaller cross-sectional areas (74) in contact with said outer wall (30) and said inner walls (32).

8. The heat exchanger (20) as set form in any preceding claim, wherein said heat exchanger (20) is formed by additive manufacturing techniques.

9. A method of forming a heat exchanger (96,20) comprising:
laying down layers with an additive manufacturing process and forming a plurality of outer walls (30) and a plurality of inner walls (32) forming a first fluid port (22) for communicating a first fluid into a chamber (23) formed on one side of said plurality of inner walls (32) and forming a second port (28) communicating a second fluid into a second chamber (29) formed on an opposed side of said plurality of inner walls (32), and forming a plurality of pins (42,98) extending from said plurality of inner walls (32) in at least one of said chambers (23,29), said plurality of pins (42,98) formed to have a generally frusto-conical surface (81;92),
and are formed between two of said plurality of inner walls (32) such that there is an outer pin (44;52;62;74) surface in contact with two of said inner walls (32) and a central pin portion (46;54;64;72); **characterised in that**
surfaces (82;94) are formed extending outwardly of said generally frusto-conical surface (81;92); and
said surfaces (82;94) are spikes (82) or spiral rib (94) extending outwardly and continuing around said generally frusto-conical surface (92).

10. The method of forming a heat exchanger (96,20) as set form in claim 9, wherein said generally frusto-conical surface (81;91) extends from an enlarged surface (44;52;62) in contact with one of said outer walls (30) and said plurality of inner walls (32) to a smaller central portion (46;54;64) such that there are generally frusto-conical surfaces on each side of said central portion (46;54;64).

11. The method of forming a heat exchanger (96,20) as set forth in claim 10, wherein said generally frusto-conical surfaces (48) are true frusto-conical surfaces extending along a constant angle.

12. The method of forming a heat exchanger (96,20) as set forth in claim 10, wherein said generally frusto-conical surfaces are curved (56;68).

13. The method of forming a heat exchanger (96,20) as set forth in any of claims 9 to 12, wherein said generally frusto-conical surfaces result in there being a greater cross-sectional area at a central portion (72) of said plurality of pins (42,98), and extending to smaller cross-sectional areas (74) in contact with said outer wall (30) and said inner wall (32).

## Patentansprüche

1. Wärmetauscher (20), Folgendes umfassend:
eine Vielzahl von äußeren Wänden (30) und eine Vielzahl von inneren Wänden (32), einen ersten Fluidanschluss (22), der ein erstes Fluid in eine Kammer (23) an einer Seite der Vielzahl von inneren Wänden (32) verbindet, und einen zweiten Anschluss (28), der ein zweites Fluid in eine zweite Kammer (29) an einer gegenüberliegenden Seite der Vielzahl von inneren Wänden (32) verbindet, und eine Vielzahl von Stiften (42), die sich von der Vielzahl von inneren Wänden (32) in mindestens eine der Kammern (23, 29) erstreckt, wobei die Vielzahl von Stiften (42) eine im Allgemeinen kegelstumpfförmige Fläche (81; 91) aufweist und sich zwischen zwei der Vielzahl von inneren Wänden (32) derart erstreckt, dass es einen äußeren Stiftabschnitt (44; 52; 62; 74) in Berührung mit zwei der inneren Wände (32) und einen zentralen Stiftabschnitt (46; 54; 64; 72) gibt; **dadurch gekennzeichnet, dass**
Flächen (82; 94) gebildet werden, die sich nach außen von der im Allgemeinen kegelstumpfförmigen Fläche (81; 92) erstrecken; und
die Flächen (82; 94) Spitzen (82) oder spiralförmige Rippen (94) sind, die sich nach außen und fortlaufend um die im Allgemeinen kegelstumpfförmige Fläche (92) erstrecken.

2. Wärmetauscher (20) nach Anspruch 1, wobei sich die im Allgemeinen kegelstumpfförmige Fläche (81; 91) von einer vergrößerten Fläche (44; 52; 62) erstreckt, die in Berührung mit einer der äußeren Wände (30) und der inneren Wand (32) steht, und sich derart zu einem kleineren zentralen Abschnitt (46; 54; 64) erstreckt, dass es im Allgemeinen kegelstumpfförmige Flächen an jeder Seite des zentralen Abschnitts (46; 54; 64) gibt.

3. Wärmetauscher (20) nach Anspruch 2, wobei die im Allgemeinen kegelstumpfförmigen Flächen wirkliche kegelstumpfförmige Flächen sind, die sich in einem konstanten Winkel (48) erstrecken.

4. Wärmetauscher (20) nach Anspruch 2, wobei die im Allgemeinen kegelstumpfförmigen Flächen gekrümmt (56; 68) sind.

5. Wärmetauscher (20) nach Anspruch 4, wobei die Krümmungen konvex (56) sind.

6. Wärmetauscher (20) nach Anspruch 4, wobei die Krümmungen konkav (68) sind.

7. Wärmetauscher (20) nach Anspruch 1, wobei die im Allgemeinen kegelstumpfförmige Fläche (81; 91) dazu führt, dass es einen größeren Querschnittsbereich an einem zentralen Abschnitt (72) der Vielzahl von Stiften (42) gibt, und sich zu kleineren Querschnittsbereichen (74) erstreckt, die in Berührung mit der äußeren Wand (30) und der inneren Wand (32) stehen.

8. Wärmetauscher (20) nach einem der vorstehenden Ansprüche, wobei der Wärmetauscher (20) durch additive Herstellungstechniken gebildet ist.

9. Verfahren zum Bilden eines Wärmetauschers (96, 20), Folgendes umfassend:
Niederlegen von Schichten mit einem additiven Herstellungsprozess und Bilden einer Vielzahl von äußeren Wänden (30) und einer Vielzahl von inneren Wänden (32), die einen ersten Fluidanschluss (22) zum Verbinden eines erstes Fluids in eine Kammer (23) bilden, die an einer Seite der Vielzahl von inneren Wänden (32) gebildet ist, und Bilden eines zweites Anschlusses (28), der ein zweites Fluid in eine zweite Kammer (29) verbindet, die an einer gegenüberliegenden Seite der Vielzahl von inneren Wänden (32) gebildet ist, und Bilden einer Vielzahl von Stiften (42, 98), die sich von der Vielzahl von inneren Wänden (32) in mindestens eine der Kammern (23, 29) erstreckt, wobei die Vielzahl von Stiften (42, 98) geformt ist, um eine im Allgemeinen kegelstumpfförmige Fläche (81; 92) aufzuweisen, und zwischen zwei der Vielzahl von inneren Wänden (32) derart gebildet ist, dass es einen äußere Stiftflache (44; 52; 62; 74) gibt, die in Berührung mit zwei der inneren Wände (32) und einem zentralen Stiftabschnitt (46; 54; 64; 72) steht; **dadurch gekennzeichnet, dass**
Flächen (82; 94) gebildet werden, die sich nach außen von der im Allgemeinen kegelstumpfförmigen Fläche (81; 92) erstrecken; und
die Flächen (82; 94) Spitzen (82) oder spiralförmige Rippen (94) sind, die sich nach außen und fortlaufend um die im Allgemeinen kegelstumpfförmige Fläche (92) erstrecken.

10. Verfahren zum Bilden eines Wärmetauschers (96, 20) nach Anspruch 9, wobei sich die im Allgemeinen kegelstumpfförmige Fläche (81; 91) von einer vergrößerten Fläche (44; 52; 62), die in Berührung mit einer der äußeren Wände (30) steht, und sich die Vielzahl von inneren Wänden (32) derart zu einem kleineren zentralen Abschnitt (46; 54; 64) erstrecken, dass es im Allgemeinen kegelstumpfförmige Flächen an jeder Seite des zentralen Abschnitts (46; 54; 64) gibt.

11. Verfahren zum Bilden eines Wärmetauschers (96, 20) nach Anspruch 10, wobei sich die im Allgemeinen kegelstumpfförmigen Flächen (48) wirkliche kegelstumpfförmige Flächen sind, die sich entlang eines konstanten Winkels erstrecken.

12. Verfahren zum Bilden eines Wärmetauschers (96, 20) nach Anspruch 10, wobei die im Allgemeinen kegelstumpfförmigen Flächen gekrümmt (56; 68) sind.

13. Verfahren zum Bilden eines Wärmetauschers (96, 20) nach einem der Ansprüche 9 bis 12, wobei die im Allgemeinen kegelstumpfförmigen Flächen dazu führen, dass es an einem zentralen Abschnitt (72) der Vielzahl von Stiften (42, 98) einen größeren Querschnittsbereich gibt, und sich zu kleineren Querschnittsbereichen (74) erstrecken, die in Berührung mit der äußeren Wand (30) und der inneren Wand (32) stehen.

## Revendications

1. Échangeur de chaleur (20) comprenant :
une pluralité de parois extérieures (30) et une pluralité de parois intérieures (32), un premier orifice de fluide (22) communiquant un premier fluide dans une chambre (23) sur un côté de ladite pluralité de parois intérieures (32) et un second un orifice (28) communiquant un second fluide dans une seconde chambre (29) sur un côté opposé de ladite pluralité de parois intérieures (32), et une pluralité de broches (42) s'étendant depuis ladite pluralité de parois intérieures (32) dans au moins l'une desdites chambres (23, 29), ladite pluralité de broches (42) ayant une surface généralement tronconique (81 ; 91),
et
l'extension entre deux de ladite pluralité de parois intérieures (32) de sorte qu'il existe une partie de broche extérieure (44 ; 52 ; 62 ; 74) en contact avec deux desdites parois intérieures (32) et une partie de broche centrale (46 ; 54 ; 64 ; 72) ; **caractérisé en ce que** des surfaces (82 ; 94) sont formées s'étendant vers l'extérieur de ladite surface généralement tronconique (81 ; 92) ; et
lesdites surfaces (82 ; 94) sont des pointes (82) ou une nervure en spirale (94) s'étendant vers l'extérieur et se prolongeant autour de ladite surface généralement tronconique (92) .

2. Échangeur de chaleur (20) selon la revendication 1, dans lequel ladite surface généralement tronconique (81 ; 91) s'étend à partir d'une surface agrandie (44 ; 52 ; 62) en contact avec l'une desdites parois extérieures (30) et ladite paroi intérieure (32), et s'étendant jusqu'à une partie centrale plus petite (46 ; 54 ; 64) telle qu'il existe des surfaces généralement tronconiques de chaque côté de ladite partie centrale (46 ; 54 ; 64).

3. Échangeur de chaleur (20) selon la revendication 2, dans lequel lesdites surfaces généralement tronconiques sont de véritables surfaces tronconiques s'étendant selon un angle constant (48).

4. Échangeur de chaleur (20) selon la revendication 2, dans lequel lesdites surfaces généralement tronconiques sont courbés (56 ; 68).

5. Échangeur de chaleur (20) selon la revendication 4, dans lequel lesdites courbes sont convexes (56).

6. Échangeur de chaleur (20) selon la revendication 4, dans lequel lesdites courbes sont concaves (68).

7. Échangeur de chaleur (20) selon la revendication 1, dans lequel ladite surface généralement tronconique (81 ; 91) entraîne une plus grande zone de section transversale au niveau d'une partie centrale (72) de ladite pluralité de broches (42), et s'étendant jusqu'à de plus petites zones de section transversale (74) en contact avec ladite paroi extérieure (30) et lesdites parois intérieures (32).

8. Échangeur de chaleur (20) selon une quelconque revendication précédente, dans lequel ledit échangeur de chaleur (20) est formé par des techniques de fabrication additive.

9. Procédé de formation d'un échangeur de chaleur (96, 20) comprenant :
la fixation de couches avec un processus de fabrication additive et la formation d'une pluralité de parois extérieures (30) et d'une pluralité de parois intérieures (32) formant un premier orifice de fluide (22) destiné à communiquer un premier fluide dans une chambre (23) formée sur un côté de ladite pluralité de parois intérieures (32) et formant un second orifice (28) communiquant un second fluide dans une seconde chambre (29) formée sur un côté opposé de ladite pluralité de parois intérieures (32), et formant une pluralité de broches (42, 98) s'étendant à partir de ladite pluralité de parois intérieures (32) dans au moins l'une desdites chambres (23, 29), ladite pluralité de broches (42, 98) étant formée de manière à avoir une surface généralement tronconique (81 ; 92) et étant formée entre deux de ladite pluralité de parois intérieures (32) de sorte qu'il existe une surface de broche extérieure (44 ; 52 ; 62 ; 74) en contact avec deux desdites parois intérieures (32) et une partie de broche centrale (46 ; 54 ; 64 ; 72) ; **caractérisé en ce que** des surfaces (82 ; 94) sont formées s'étendant vers l'extérieur de ladite surface généralement tronconique (81 ; 92) ; et
lesdites surfaces (82 ; 94) sont des pointes (82) ou une nervure en spirale (94) s'étendant vers l'extérieur et se prolongeant autour de ladite surface généralement tronconique (92) .

10. Procédé de formation d'un échangeur de chaleur (96, 20) selon la forme définie dans la revendication 9, dans lequel ladite surface généralement tronconique (81 ; 91) s'étend à partir d'une surface agrandie (44 ; 52 ; 62) en contact avec l'une desdites parois extérieures (30) et ladite pluralité de parois intérieures (32) jusqu'à une partie centrale plus petite (46 ; 54 ; 64) de sorte qu'il existe des surfaces généralement tronconiques de chaque côté de ladite partie centrale (46 ; 54 ; 64).

11. Procédé de formation d'un échangeur de chaleur (96, 20) selon la revendication 10, dans lequel lesdites surfaces généralement tronconiques (48) sont de véritables surfaces tronconiques s'étendant selon un angle constant.

12. Procédé de formation d'un échangeur de chaleur (96, 20) selon la revendication 10, dans lequel lesdites surfaces généralement tronconiques sont courbées (56 ; 68).

13. Procédé de formation d'un échangeur de chaleur (96, 20) selon l'une quelconque des revendications 9 à 12, dans lequel lesdites surfaces généralement tronconiques entraînent une plus grande zone de section transversale au niveau d'une partie centrale (72) de ladite pluralité de broches (42, 98), et s'étendant jusqu'à de plus petites zones de section transversale (74) en contact avec ladite paroi extérieure (30) et ladite paroi intérieure (32).
